# FASCICULE DE BREVET EUROPEEN

(11) **EP 2 877 700 B1**
(45) Date de publication et mention de la délivrance du brevet: **01.04.2020**
(21) Numéro de dépôt: 13756592.5
(22) Date de dépôt: 24.07.2013
(51) Int. Cl.: F01D 5/00, B23P 6/00

(54) **VEINE AÉRODYNAMIQUE AVEC PIÈCE DE MODIFICATION ET PROCÉDÉ DE MODIFICATION ASSOCIÉ**
AERODYNAMISCHE DÜSE MIT TEIL ZUR MODIFIZIERUNG UND VERFAHREN ZUR MODIFIZIERUNG EINER DÜSE
AERODYNAMIC CHANNEL WITH MODIFYING ELEMENT AND PROCESS OF MODIFYING SUCH CHANNEL

(30) Priorité: 27.07.2012 FR 1257321
(43) Date de publication de la demande: 03.06.2015
(73) Titulaire: Safran Aircraft Engines, 75015 Paris (FR)
(72) Inventeur: GILLANT, Grégory, Nicolas, Gérald, F-77550 Moissy-Gramayel Cédex (FR); DOUSSEAUD, Sylvain, F-77550 Moissy-Gramayel Cédex (FR); CLEMOT, Stéphane, F-77550 Moissy-Gramayel Cédex (FR)
(74) Mandataire: Brevalex
(86) Numéro de dépôt international: PCT/FR2013/051782
(87) Numéro de publication internationale: WO 2014/016515

(56) Documents cités:
- EP-A1- 1 992 787
- GB-A- 2 482 170
- US-A- 4 023 350
- US-A1- 2009 199 565

## Description

### DOMAINE TECHNIQUE

La présente invention se rapporte au domaine des veines aérodynamiques, et plus particulièrement à celles présentes dans les turbomachines. Elle concerne une pièce de modification du profil d'une veine aérodynamique, la veine aérodynamique et la turbomachine comportant une telle pièce, ainsi qu'un procédé de modification du profil d'une veine aérodynamique.

L'invention s'applique en particulier à tout type de turbomachines terrestres ou aéronautiques, et notamment aux turbomachines d'aéronef telles que les turboréacteurs et les turbopropulseurs.

### ÉTAT DE LA TECHNIQUE ANTÉRIEURE

Dans le domaine de l'aérodynamique, et plus particulièrement dans celui des turbomachines, les veines aérodynamiques sont des éléments qui permettent le passage et le guidage de l'écoulement du fluide, notamment de l'air.

Le brevet US 4,023,350 A et les demandes de brevet US 2009/199565 A1, EP 1992 787 A1 et GB 2 482 170 A illustrent, entre autres, l'état de la technique antérieur.

De façon générale, notamment quel que soit le type de turbomachine, les choix effectués pour la conception des veines aérodynamiques ont une influence directe sur les performances du moteur, notamment en termes de poussée aérodynamique, de rendement et de performances acoustiques. Il est ainsi le plus souvent nécessaire de tester plusieurs types de veines aérodynamiques pour parvenir à optimiser l'ensemble des performances attendues pour la turbomachine.

Une veine aérodynamique comporte, de façon connue en soi, un ensemble d'éléments appelés profils de veine aérodynamique qui sont directement usinés sur les pièces de la turbomachine réalisant l'écoulement de l'air, par exemple des viroles. Ces éléments définissent le profil général de la veine aérodynamique qui permet le guidage de l'écoulement d'air. Les veines aérodynamiques sont de ce fait complexes à réaliser et coûteuses. Elles sont également à l'origine de temps de fabrication très longs. En particulier, les études d'influences réalisées sur les veines aérodynamiques, pouvant conduire à remplacer au moins partiellement une veine aérodynamique déjà en place par une veine aérodynamique modifiée, sont des postes de dépenses en temps et en coûts non négligeables dans le développement d'une turbomachine.

### EXPOSÉ DE L'INVENTION

Il existe ainsi un besoin pour proposer une nouvelle solution pour modifier le profil d'une veine aérodynamique d'une turbomachine, notamment une veine aérodynamique déjà en place sur la turbomachine. Il existe tout particulièrement un besoin pour permettre la modification du profil de la veine aérodynamique de façon simple et rapide.

L'invention a pour but de remédier au moins partiellement aux besoins mentionnés ci-dessus et aux inconvénients relatifs aux réalisations de l'art antérieur.

Une pièce de modification du profil d'une veine aérodynamique, notamment une veine aérodynamique de turbomachine, comporte:
- une première face destinée à être fixée sur la veine aérodynamique, et
- une deuxième face définissant un profil de veine aérodynamique modifié, destinée à modifier le profil initial de la veine aérodynamique, et notamment à modifier au moins le profil axial initial de la veine aérodynamique.

Par « pièce de modification », on entend un élément destiné à être rapporté sur la veine aérodynamique pour en modifier son profil. La pièce de modification peut également être désignée par le terme d'empiècement ou par son équivalent anglais « patch ».

Par « profil axial », on entend le profil ou contour de la veine aérodynamique observé selon l'axe longitudinal de la turbomachine. Par « profil axial initial », on entend le profil axial de la veine aérodynamique avant mise en place de la pièce de modification.

La solution proposée par l'invention peut permettre d'éviter les divers inconvénients des solutions connues de l'art antérieur tout en assurant la ou les modifications souhaitées pour la veine aérodynamique. En effet, la pièce de modification selon l'invention peut permettre, après fixation sur la veine aérodynamique, d'obtenir un profil modifié souhaité de la veine aérodynamique par rapport au profil initial de celle-ci.

Grâce à l'invention, il peut ainsi être possible de modifier une veine aérodynamique de façon rapide et peu coûteuse, et ce sans recourir à la fabrication de nouvelles pièces volumineuses, notamment des pièces métalliques, et sans avoir à démonter et remonter la turbomachine pour le remplacement de la veine aérodynamique.

La pièce de modification selon l'invention peut en outre comporter l'une ou plusieurs des caractéristiques suivantes prises isolément ou suivant toutes combinaisons techniques possibles.

La pièce de modification peut modifier le profil axial initial de la veine aérodynamique sur au moins la majeure partie de celui-ci, mieux sur au moins les trois quarts de celui-ci, voire sensiblement sur la totalité de celui-ci.

La deuxième face peut définir un profil de veine aérodynamique qui est modifié, autrement dit différent, par rapport au profil de la partie de la veine aérodynamique sur laquelle la pièce de modification est destinée à être fixée par sa première face.

La première face de la pièce peut être apte à épouser le profil d'au moins une partie de la veine aérodynamique, notamment le profil axial initial d'au moins une partie de la veine aérodynamique. En particulier, la première face de la pièce peut être apte à épouser le profil de la partie de la veine aérodynamique sur laquelle elle est destinée à être fixée. Autrement dit, la première face peut être conçue de sorte s'adapter exactement à la forme de la partie de la veine aérodynamique sur laquelle elle est destinée à être fixée.

La deuxième face de la pièce peut être différente de la première face. En particulier, la deuxième face de la pièce peut définir un profil de veine aérodynamique différent de celui défini par la première face.

Avantageusement, l'invention peut ainsi permettre de prévoir une pièce de modification dont une face est prévue pour épouser parfaitement la forme du profil initial de la veine aérodynamique et dont une autre face est prévue pour réaliser un nouveau profil modifié de la veine aérodynamique.

La pièce de modification peut être fixée à la veine aérodynamique par tout type de moyen, et notamment par collage. En particulier, la première face de la pièce de modification peut être revêtue au moins partiellement d'une colle, destinée à venir au contact de la veine aérodynamique.

La pièce de modification peut en outre comporter au moins une surface, différente de la première face, revêtue de colle. En effet, il peut être possible qu'une ou plusieurs autres surfaces de la pièce, différentes de la première face, en contact avec la veine aérodynamique se retrouvent collées par le refoulement de colle lors de la mise en place de la pièce de modification sur la veine aérodynamique. Cette situation peut néanmoins être favorable à la tenue de la pièce en position sur la veine aérodynamique du fait d'une augmentation de la surface collée.

La pièce de modification peut comporter une rainure (ou logement) pour recevoir une frette destinée à maintenir la pièce en position sur la veine aérodynamique. En particulier, la deuxième face de la pièce de modification peut comporter une telle rainure.

La frette peut correspondre à un ruban très résistant servant à maintenir en position la pièce de modification sur la veine aérodynamique.

Avantageusement, en cas de décollage de la pièce fixée sur la veine aérodynamique, un lien mécanique de fixation est maintenu grâce à la frette pour assurer le placage de la pièce sur la veine aérodynamique.

La pièce de modification peut être réalisée en tout type de matériau. En particulier, la pièce de modification peut être réalisée par un procédé de prototypage rapide, notamment par stéréolithographie. La pièce de modification peut ainsi comporter par exemple une résine stéréolithographique et/ou une poudre métallique.

L'invention a pour objet une veine aérodynamique selon la revendication 1.

La veine aérodynamique comporte plusieurs pièces de modification selon l'invention, notamment au moins deux, voire trois, voire quatre pièces. Ces pièces de modification peuvent être au moins en partie disposées de façon superposée les unes par rapport aux autres.

La superposition de plusieurs pièces de modification les unes sur les autres peut permettre de former plusieurs couches, chaque couche constituant une influence de veine aérodynamique.

La disposition de façon adjacente des pièces de modification sur la veine aérodynamique peut faire apparaître des jeux entre les pièces de modifications. Ces jeux peuvent par exemple être compensés par un ajout de matière, notamment pour permettre une bonne étanchéité.

La mise en place d'une ou plusieurs pièces de modification sur la veine aérodynamique peut permettre d'éviter la réalisation longue et coûteuse de nouvelles pièces métalliques destinées à remplacer au moins partiellement les profils de veine de la veine aérodynamique, seules les pièces de modification étant à réaliser.

La veine aérodynamique comporte une pluralité de pièces de modification du profil de la veine aérodynamique, agencées en juxtaposition les unes par rapport aux autres transversalement par rapport à l'axe longitudinal de la turbomachine de façon à assurer une sensible continuité du profil modifié de la veine aérodynamique sur au moins une section transversale de la veine aérodynamique.

Grâce à l'invention, il peut ainsi être possible de modifier le profil axial de la veine aérodynamique selon l'axe longitudinal de la turbomachine et d'assurer une sensible continuité du profil modifié transversalement par l'utilisation de plusieurs pièces de modification.

La veine aérodynamique peut correspondre à tout type de veine aérodynamique présente sur une turbomachine. Par exemple, la veine aérodynamique peut être un disque d'un aubage de redressement, notamment un aubage de redressement de sortie (ou encore OGV pour « Outlet Guide Vane » en anglais) ou un aubage de redressement d'entrée (ou encore IGV pour « Inlet Guide Vane » en anglais).

La ou les pièces de modification selon l'invention peuvent être placées entre les aubes de l'aubage de redressement. En particulier, chaque pièce de modification peut être intercalée entre deux aubes successives.

L'invention a encore pour objet, selon un autre de ses aspects, une turbomachine caractérisée en ce qu'elle comporte une veine aérodynamique selon la revendication 1.

La turbomachine peut comporter des moyens de filtrage de l'air destiné à venir au contact de la pièce de modification. En effet, la pièce de modification peut être réalisée en un matériau sensible à l'abrasion, notamment lorsque réalisée dans un matériau stéréolithographique, et le filtrage de l'air peut permettre d'éviter la projection de particules abrasives sur la pièce de modification.

La pièce de modification peut en outre être appliquée sur une veine aérodynamique d'une partie froide de la turbomachine. En particulier, la pièce de modification peut être située dans une zone froide de la turbomachine, présentant notamment une température inférieure ou égale à 40°C. En effet, au-delà d'une telle température, le ou les matériaux constitutifs de la pièce de modification peuvent ne pas résister, notamment lorsqu'elle comporte un matériau stéréolithographique.

L'invention a encore pour objet, selon un autre de ses aspects, un procédé de modification du profil d'une veine aérodynamique selon la revendication 7.

Le procédé peut comporter une étape de lissage à au moins une intersection entre la pièce de modification et la veine aérodynamique. L'étape de lissage peut permettre de reproduire le profil de la veine aérodynamique de façon continue au niveau d'une intersection entre la pièce de modification et la veine aérodynamique.

L'étape de lissage peut également être mise en œuvre à l'intersection entre deux pièces de modification selon l'invention.

L'étape de lissage peut encore être mise en œuvre au niveau de la rainure de la pièce de modification recevant une frette, en particulier au-dessus de la frette pour reconstituer le profil de la veine aérodynamique.

L'étape de lissage peut par exemple comporter la mise en place d'un élastomère, notamment un élastomère de silicone RTV (pour « Room Temperature Vulcanizing » en anglais ou température ambiante de vulcanisation), à l'intersection entre la pièce de modification et la veine aérodynamique.

Le procédé selon l'invention peut comporter l'étape consistant à disposer de façon adjacente et/ou superposée une pluralité de pièces de modification les unes par rapport aux autres.

De la sorte, il peut être possible de réaliser de nouvelles influences de veine aérodynamique à partir de la veine aérodynamique initiale métallique. Il peut donc être possible d'éviter le remplacement de la veine aérodynamique métallique comme selon les solutions de l'art antérieur.

Le procédé selon l'invention peut en outre comporter, indépendamment ou en combinaison les unes avec les autres, les étapes suivantes :
- réaliser la ou les pièces de modification par stéréolithographie,
- revêtir la ou les pièces de modification, notamment la première face de chaque pièce de modification, d'une colle pour la fixation à la veine aérodynamique,
- placer une frette dans la ou les rainures de la ou des pièces de modification pour le maintien mécanique de la ou des pièces de modification sur la veine aérodynamique,
- lisser la ou les intersections entre la ou les pièces de modification et la veine aérodynamique et/ou entre les pièces de modification elles-mêmes et/ou entre une frette et la ou les pièces de modification.

La veine aérodynamique, la turbomachine et le procédé selon l'invention peuvent comporter l'une quelconque des caractéristiques précédemment énoncées, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 représente, en perspective, un exemple de pièce de modification selon l'invention,
- la figure 2 représente, en perspective, un exemple de veine aérodynamique comportant des pièces de modification selon l'invention,
- la figure 3 est une autre vue en perspective de la veine aérodynamique de la figure 2,
- la figure 4 est une vue selon IV de la figure 2, et
- la figure 5 est une vue agrandie d'une partie de la figure 4.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

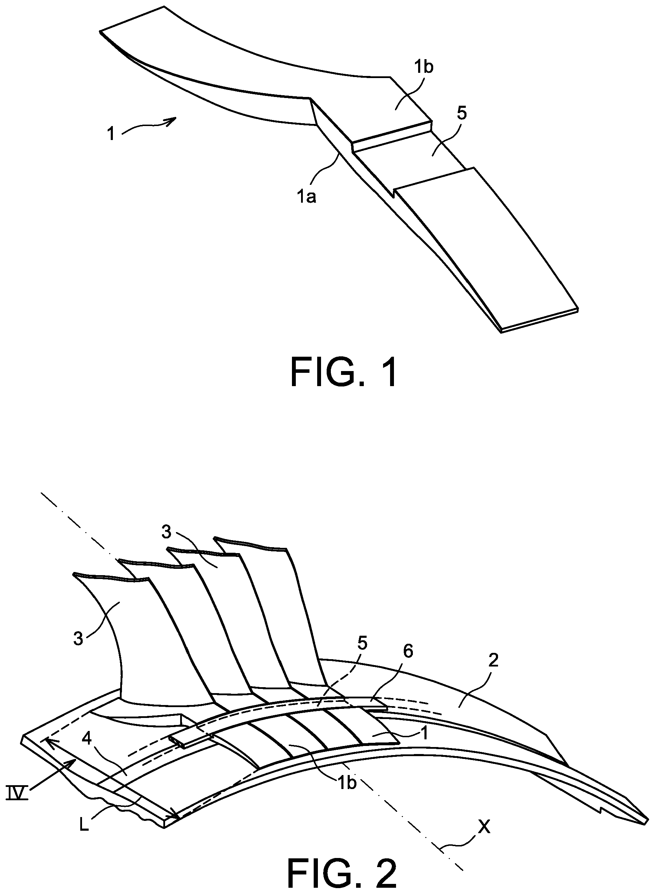

Il va être décrit ci-après, en référence aux figures 1 à 5 des exemples de réalisation d'une pièce de modification et d'une veine aérodynamique selon l'invention.

Sur la figure 1, on a représenté en perspective un exemple de pièce 1 de modification du profil d'une veine aérodynamique 2 selon l'invention.

La pièce 1, encore désignée ci-après par le terme « patch », comporte une première face la destinée à être fixée sur la veine aérodynamique 2, et une deuxième face 1b, opposée à la première face la, qui définit un profil de veine aérodynamique modifié par rapport au profil initial de la partie de la veine aérodynamique 2 sur laquelle la première face la est destinée à être fixée.

La première face la du patch 1 peut notamment être revêtue d'une colle pour permettre sa fixation à la veine aérodynamique 2.

Par ailleurs, le patch 1 comporte encore une rainure 5 (ou encoche), qui débouche sur les deux côtés du patch 1, pour permettre la mise en place d'une bande de fixation ou frette 6 destinée à créer un maintien mécanique du patch 1 sur la veine aérodynamique 2. Un tel maintien mécanique par la frette 6 peut notamment s'avérer utile en cas de décollement du patch 1.

Le patch 1 peut être réalisé en tout type de matériau. De préférence, le patch 1 est réalisé par un procédé de stéréolithographie. Le procédé de stéréolithographie peut notamment permettre de réaliser toute forme souhaitée pour le patch 1, et éventuellement de prévoir une réalisation du patch 1 en plusieurs parties fixées entre elles, notamment par collage, afin de s'adapter à tout type de profil souhaité pour la veine aérodynamique 2.

Les matériaux réalisés par stéréolithographie étant particulièrement sensibles à l'abrasion et aux températures élevées, la turbomachine comportant le patch 1 pourra, le cas échéant, être équipée de moyens de filtrage de l'air destiné à venir au contact du patch 1 pour éviter que des poussières abrasives ne viennent au contact du patch 1. De même, le patch 1 pourra être placé dans une zone froide de la turbomachine, notamment dans une zone où la température est inférieure ou égale à 40°C.

La figure 2 représente en perspective un exemple de veine aérodynamique 2 comportant quatre patchs 1 selon l'invention.

A titre d'exemple uniquement, la veine aérodynamique 2 peut être un disque d'un aubage de redressement d'entrée (IGV), lequel comporte des aubes de redressement 3.

Les patchs 1 peuvent être disposés de façon adjacente les uns par rapport aux autres, chaque patch 1 étant intercalé entre deux aubes de redressement 3 successives.

Les patchs 1 peuvent s'étendre selon leur plus grande dimension L, sur la veine aérodynamique 2, selon l'axe longitudinal X de la turbomachine, comme on peut le voir sur les figures 2, 3 et 4.

Les patchs 1 peuvent par ailleurs être maintenus en position sur la veine aérodynamique 2 par collage et également par une frette 6, visible sur les figures 2 à 4, placée dans les rainures 5 des patchs 1.

Dans cet exemple, les quatre patchs 1 sont identiques. Toutefois, la veine aérodynamique 2 peut comporter des patchs identiques ou différents.

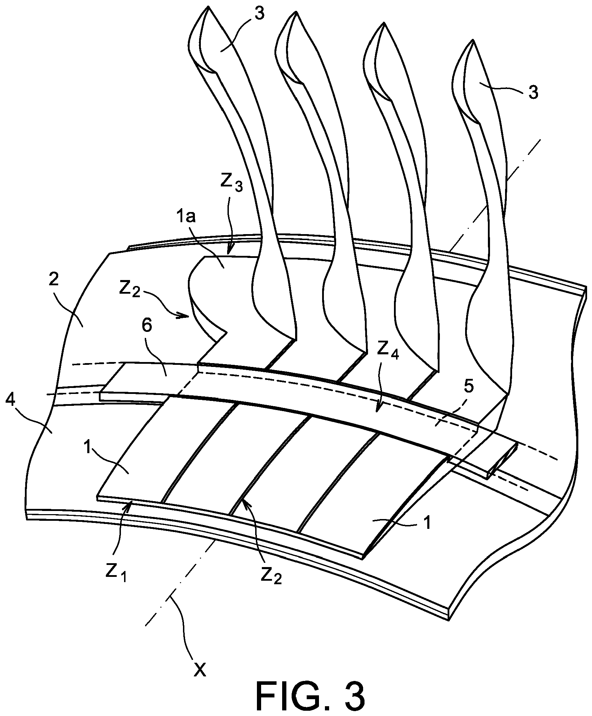

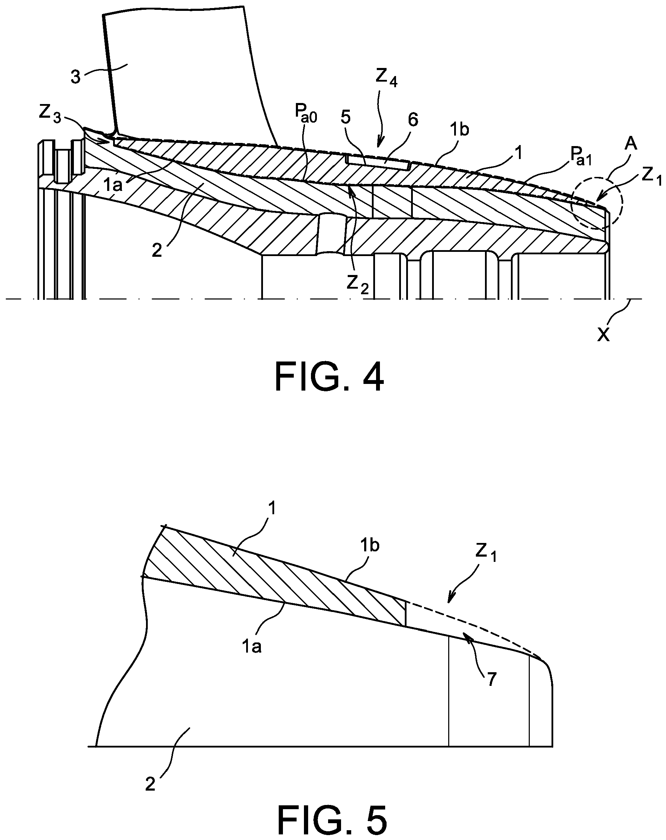

Comme on peut le voir sur les figures 3 et 4, laquelle est une vue selon IV de la figure 2, un lissage peut être prévu dans certaines zones des patchs 1 pour permettre une reconstitution de façon continue du profil aérodynamique de la veine aérodynamique 2.

En particulier, un tel lissage peut être prévu dans les zones amont Z₁ et aval Z₃ des patchs 1, ainsi que dans les zones d'intersection Z₂ entre les patchs 1 ou entre un patch 1 et la veine aérodynamique 2. Le lissage peut également être prévu au niveau des zones Z₄ où la frette 6 est logée dans les rainures 5 des patchs 1.

Le lissage peut par exemple consister en l'ajout d'un matériau élastomère, notamment un élastomère de silicone RTV, destiné à créer une continuité entre les patchs 1 et/ou un patch 1 et la veine aérodynamique 2 et/ou entre une rainure 5 d'un patch 1 et la frette 6.

La figure 5 est une vue agrandie de la zone A de la figure 4, destinée à illustrer le lissage réalisé dans une zone Z₁ en amont d'un patch 1 à l'intersection entre le patch 1 et la veine aérodynamique 2.

Sur cette figure 5, l'ajout d'un matériau élastomère 7 est représenté en pointillés et l'on constate bien la continuité de surface obtenue entre le patch 1 et la veine aérodynamique 2 pour reconstituer un profil continu de la veine aérodynamique 2.

Ainsi, grâce à une telle pièce de modification ou patch 1 selon l'invention muni d'un profil aérodynamique modifié sur sa deuxième face 1b, l'invention peut permettre une modification simple et rapide du profil de la veine aérodynamique 2 une fois le patch 1 mis en place sur celle-ci par sa première face la.

En particulier, le profil axial initial Pₐ₀ de la veine aérodynamique 2 (visible sur la figure 4), qui est défini selon l'axe longitudinal X de la turbomachine avant mise en place de la pièce de modification 1, peut être modifié par l'ajout de la pièce de modification 1, celle-ci présentant une deuxième face 1b définissant un profil axial modifié Pₐ₁ (visible sur la figure 4) pour la veine aérodynamique 2.

Le profil initial de la veine aérodynamique 2 peut être facilement adapté pour obtenir le nouveau profil souhaité par une multiplication des patchs 1 en fonction des besoins, ceux-ci pouvant être ou non placés côte à côte et/ou au moins partiellement superposés les uns aux autres.

Bien entendu, l'invention n'est pas limitée à l'exemple de réalisation qui vient d'être décrit. Diverses modifications peuvent y être apportées par l'homme du métier.

L'expression « comportant un » doit être comprise comme étant synonyme de « comportant au moins un », sauf si le contraire est spécifié.

## Revendications

1. Veine aérodynamique (2) de turbomachine, présentant un profil axial initial (Pₐ₀) défini selon l'axe longitudinal (X) de la turbomachine et permettant le passage et le guidage de l'écoulement d'un fluide, et comportant une pluralité de pièces (1) de modification du profil de la veine aérodynamique (2), chacune étant rapportée sur la veine aérodynamique (2) pour en modifier le profil axial initial (Pₐ₀) et chacune comportant :
- une première face (1a) destinée à être fixée sur la veine aérodynamique (2), et
- une deuxième face (1b) définissant un profil de veine aérodynamique modifié, destinée à modifier au moins le profil axial initial (Pₐ₀) de la veine aérodynamique, **caractérisée en ce que**
chaque pièce (1) de modification du profil de la veine aérodynamique (2) s'étend selon sa plus grande dimension (L), sur la veine aérodynamique (2), selon l'axe longitudinal (X) de la turbomachine, et
les pièces (1) de modification du profil de la veine aérodynamique (2) étant agencées en juxtaposition les unes par rapport aux autres transversalement par rapport à l'axe longitudinal (X) de la turbomachine de façon à assurer une sensible continuité du profil modifié sur au moins une section transversale de la veine aérodynamique (2).

2. Veine aérodynamique (2) selon la revendication 1, **caractérisée en ce que** la première face (1a) de chaque pièce (1) est apte à épouser le profil d'au moins une partie de la veine aérodynamique (2), notamment le profil axial initial d'au moins une partie de la veine aérodynamique (2).

3. Veine aérodynamique (2) selon la revendication 1 ou 2, **caractérisée en ce que** chaque pièce (1) de modification du profil de la veine aérodynamique (2) comporte une rainure (5) pour recevoir une frette (6) destinée à maintenir la pièce (1) en position sur la veine aérodynamique (2).

4. Veine aérodynamique (2) selon l'une des revendications précédentes, **caractérisée en ce que** chaque pièce (1) de modification du profil de la veine aérodynamique (2) est réalisée par un procédé de prototypage rapide, notamment par stéréolithographie.

5. Veine aérodynamique (2) selon l'une quelconque des revendications précédentes, **caractérisée en ce qu'**elle est un disque d'un aubage de redressement, notamment un aubage de redressement de sortie (OGV) ou d'entrée (IGV).

6. Turbomachine **caractérisée en ce qu'**elle comporte une veine aérodynamique (2) selon l'une quelconque des revendications précédentes.

7. Procédé de modification du profil d'une veine aérodynamique (2), **caractérisé en ce qu'**il comporte l'étape consistant à fixer une pluralité de pièces (1) de modification d'une veine aérodynamique (2) selon l'une quelconque des revendications 1 à 5 sur la veine aérodynamique (2).

8. Procédé selon la revendication 7, **caractérisé en ce qu'**il comporte une étape de lissage à au moins une intersection entre chaque pièce (1) de modification et la veine aérodynamique (2).

## Patentansprüche

1. Aerodynamische Düse (2) einer Turbomaschine, die ein axiales Ausgangsprofil (Pₐ₀) aufweist, das entlang der Längsachse (X) der Turbomaschine definiert ist und den Durchgang sowie die Führung einer Flüssigkeitsströmung ermöglicht, und die eine Mehrzahl von Teilen (1) zur Modifizierung des Profils der aerodynamischen Düse (2) umfasst, die jeweils über die aerodynamische Düse (2) verbunden sind, um das axiale Ausgangsprofil (Pₐ₀) zu modifizieren, und die jeweils Folgendes aufweisen:
- eine erste Fläche (1a), die auf der aerodynamischen Düse (2) befestigt werden soll, und
- eine zweite Fläche (1b), die ein Profil der modifizierten aerodynamischen Düse definiert und zumindest das axiale Ausgangsprofil (Pₐ₀) der aerodynamischen Düse modifizieren soll, **dadurch gekennzeichnet, dass**
sich jedes Teil (1) zur Modifizierung des Profils der aerodynamischen Düse (2) entlang seiner größten Abmessung (L) auf der aerodynamischen Düse (2) entlang der Längsachse (X) der Turbomaschine erstreckt, und
die Teile (1) zur Modifizierung des Profils der aerodynamischen Düse (2) quer zur Längsachse (X) der Turbomaschine nebeneinander derart angeordnet sind, dass sie eine wesentliche Kontinuität des modifizierten Profils auf zumindest einem Querschnitt der aerodynamischen Düse (2) sicherstellen.

2. Aerodynamische Düse (2) nach Anspruch 1, **dadurch gekennzeichnet, dass** die erste Fläche (1a) jedes Teils (1) dazu geeignet ist, sich an das Profil von zumindest einem Teil des aerodynamischen Profils (2), insbesondere an das axiale Ausgangsprofil von mindestens einem Teil der aerodynamischen Düse (2) anzupassen.

3. Aerodynamische Düse (2) nach Anspruch 1 oder 2, **dadurch gekennzeichnet, dass** jedes Teil (1) zur Modifizierung des Profils der aerodynamischen Düse (2) eine Nut (5) zum Aufnehmen eines Bundes (6) umfasst, der das Teil (1) in seiner Position auf der aerodynamischen Düse (2) halten soll.

4. Aerodynamische Düse (2) nach einem der vorhergehenden Ansprüche, **dadurch gekennzeichnet, dass** jedes Teil (1) zur Modifizierung des Profils der aerodynamischen Düse (2) durch ein Verfahren zur schnellen Prototypentwicklung, insbesondere durch Stereolithographie, verwirklicht wird.

5. Aerodynamische Düse (2) nach einem der vorhergehenden Ansprüche, **dadurch gekennzeichnet, dass** diese aus einer Scheibe eines Leitrades, insbesondere eines Austrittsleitrades (OGV) oder Eintrittsleitrades (IGV) besteht.

6. Turbomaschine, **dadurch gekennzeichnet, dass** sie eine aerodynamische Düse (2) nach einem der vorhergehenden Ansprüche umfasst.

7. Verfahren zur Modifizierung des Profils einer aerodynamischen Düse (2), **dadurch gekennzeichnet, dass** sie den Schritt bestehend aus dem Befestigen einer Mehrzahl von Teilen (1) zur Modifizierung einer aerodynamischen Düse (2) nach einem der Ansprüche 1 bis 5 auf der aerodynamischen Düse (2) umfasst.

8. Verfahren nach Anspruch 7, **dadurch gekennzeichnet, dass** dieses einen Schritt des Glättens an mindestens einer Schnittstelle zwischen jedem Teil (1) zur Modifizierung und der aerodynamischen Düse (2) umfasst.

## Claims

1. An aerodynamic jet (2) for a turbomachine, having an initial axial profile (Pₐ₀) defined along the longitudinal axis (X) of the turbomachine and allowing passage and guiding the flow of a fluid, and including a plurality of parts (1) to modify the profile of an aerodynamic jet (2), each being attached to the aerodynamic jet (2) to modify the initial axial profile (Pa0) and each including:
- a first face (1a) intended to be secured on the aerodynamic jet (2), and
- a second face (1b) defining a modified aerodynamic jet profile, intended to modify at least the initial axial profile (Pₐ₀) of the aerodynamic jet, **characterised in that** each part (1) to modify the profile of the aerodynamic jet (2) extends along its largest dimension (L), on the aerodynamic jet (2), along the longitudinal axis (X) of the turbomachine, and
the parts (1) to modify the profile of the aerodynamic jet (2) being arranged in a juxtaposition relative to each other, transversely relative to the longitudinal axis (X) of the turbomachine so as to ensure a substantial continuity of the modified profile of the aerodynamic jet (2) on at least one transverse section of the aerodynamic jet (2).

2. The aerodynamic jet (2) according to claim 1, **characterised in that** the first face (1a) of each part (1) is able to fit closely the profile of at least one portion of the aerodynamic jet (2), especially the initial axial profile of at least one portion of the aerodynamic jet (2).

3. The aerodynamic jet (2) according to claim 1 or 2, **characterised in that** each part (1) to modify the profile of the aerodynamic jet (2) includes a groove (5) to accommodate a binding band (6) intended to maintain the part (1) in position on the aerodynamic jet (2).

4. The aerodynamic jet (2) according to one of the preceding claims, **characterised in that** each part (1) to modify the profile of the aerodynamic jet (2) is made by a method of rapid prototyping, especially by stereolithography.

5. The aerodynamic jet (2) according to any of the preceding claims, **characterised in that** it is a guide vane disk, especially an outlet (OGV) or inlet (IGV) guide vane.

6. A turbomachine, **characterised in that** it includes an aerodynamic jet (2) according to any of the preceding claims.

7. A method for modifying the profile of an aerodynamic jet (2), **characterised in that** it includes the step of securing a plurality of parts (1) to modify an aerodynamic jet (2) according to any of claims 1 to 5 on the aerodynamic jet (2).

8. The method according to claim 7, **characterised in that** it includes a step of smoothing at least at one intersection between each part (1) to modify and the aerodynamic jet (2).
